# EUROPÄISCHE PATENTANMELDUNG

(11) **EP 1 878 705 A1**
(43) Veröffentlichungstag der Anmeldung: **16.01.2008**
(21) Anmeldenummer: 06405304.4
(22) Anmeldetag: 14.07.2006
(51) Int. Cl.: C02F 1/48, F16K 5/06

(54) **Vorrichtung zur Behandlung von Leitungswasser**

(71) Anmelder: MF-System GmbH, 3305 Iffwil (CH)
(72) Erfinder: Gantenbein, Hans, 3305 Iffwil (CH)
(74) Vertreter: AMMANN PATENTANWÄLTE AG BERN

(57) **Zusammenfassung**

Die Erfindung betrifft eine Vorrichtung zur Behandlung von Leitungswasser, mit einem Gehäuse (1) mit einem Einlass (4), einem Auslass (5) und zwei Ventilsitzen (10, 11), die einen zwischen dem Einlass und dem Auslass liegenden Abschnitt eines Innenraums des Gehäuses begrenzen, und mit einem Ventilglied (12), das in einer offenen Stellung eine vom Einlass durch den Abschnitt des Innenraum zum Auslass fliessende Wasserströmung ermöglicht, wogegen es in einer geschlossenen Stellung die Ventilsitze (10, 11) verschliesst, so dass der Abschnitt des Innenraums vom Einlass (4) und vom Auslass (5) getrennt ist, und dass ein Behandlungselement (17) für die Behandlung von Leitungswasser in diesem Abschnitt (x) des Innenraums angeordnet ist und das Gehäuse eine in diesen Abschnitt (x) führende, verschliessbare Öffnung (19) aufweist, durch die das Behandlungselement (17) in der geschlossenen Stellung des Ventilglieds (12) aus dem Gehäuse entnehmbar ist.

## Beschreibung

Die Erfindung betrifft eine Vorrichtung zur Behandlung von Leitungswasser gemäss dem Oberbegriff von Anspruch 1.

Eine aus der EP890522 des Anmelders bekannte Vorrichtung dieser Art ist ein magnetisch wirkendes Filter für die Reinigung von Leitungswasser. Das Gehäuse der Vorrichtung ist ein Mantelrohr, in dessen Innenraum ein mit mehreren Permanentmagneten bestücktes Element angeordnet ist, das Magnetit oder andere in durch den Innenraum fliessendem Leitungswasser treibende Partikel aus ferromagnetischem Material einfängt. Die Partikel werden durch die Magnete angezogen und durch die Magnetkraft an der Aussenfläche des Elements festgehalten.

Zur Reinigung des Elements von an seiner Aussenfläche angesammeltem Magnetit muss das Mantelrohr aus der Leitung ausgebaut werden. Wenn es sich um eine stets mit Wasser gefüllte Leitung handelt, müssen dafür beidseits des Mantelrohrs Absperrventile vorgesehen sein, was viel Platz erfordert.

Es ist eine Aufgabe der Erfindung, diese Vorrichtung so zu verbessern, dass sie bei geringerem Platzbedarf das Aus- und Einbauen der Magnete oder eines anderen Behandlungselements für die Behandlung von Leitungswasser ermöglicht.

Diese Aufgabe wird durch eine Vorrichtung mit den Merkmalen von Anspruch 1 gelöst.

Die Vorrichtung ist allgemein zur Behandlung von in Leitungen befördertem Wasser vorgesehen, wobei es sich insbesondere um Brauchwasser oder um in geschlossenen Heiz- und Kältekreisläufen zirkulierendes Wasser handeln kann. Die Behandlung dient insbesondere dem Schutz der Leitungsrohre vor Korrosion und/oder Verschlackung.

Ein Gehäuse der Vorrichtung weist einen Einlass und einen Auslass auf, die mit einem Innenraum des Gehäuses verbunden sind. Ein zwischen dem Einlass und dem Auslass liegender Abschnitt des Innenraums ist durch zwei Ventilsitze begrenzt, so dass der Abschnitt ausschliesslich durch von den Ventilsitzen umgebene Ventilöffnungen mit den angrenzenden Bereichen des Innenraums verbunden ist. Ein Ventilglied ist gegenüber den Ventilsitzen durch Betätigungsmittel zwischen einer offenen und einer geschlossenen Stellung bewegbar. In der offenen Stellung ermöglicht das Ventilglied eine vom Einlass durch den Abschnitt des Innenraums zum Auslass fliessende Wasserströmung, wogegen es in der geschlossenen Stellung an den Ventilsitzen anliegt und die Ventilöffnungen verschliesst, so dass der Abschnitt des Innenraums vom Einlass und vom Auslass getrennt ist. Das Behandlungselement, zum Beispiel ein Magnetelement mit einem oder mehreren Dauermagneten zum Einfangen von im Leitungswasser treibendem Magnetit, ist in dem genannten Abschnitt des Innenraums angeordnet und das Gehäuse weist eine in diesen Abschnitt führende, verschliessbare Öffnung auf, durch die das Behandlungselement in der geschlossenen Stellung des Ventilglieds aus dem Gehäuse entnehmbar ist. Das Ventilglied verhindert in dieser Stellung, dass am Einlass und/oder am Auslass stehendes Wasser zu der Gehäuseöffnung gelangen kann.

Bevorzugte Ausführungsformen sind in den abhängigen Ansprüchen angegeben.

Im Folgenden wird die Erfindung unter Bezugnahme auf die Figuren anhand eines Ausführungsbeispiels näher erläutert. Es zeigen:
- Figur 1: Im Längsschnitt einen Leitungsabschnitt mit einer in ihrem offenen Zustand dargestellten Vorrichtung zur Behandlung von Leitungswasser;
- Figur 2: Die Anordnung gemäss Figur 1, wobei die Vorrichtung in ihrem geschlossenen Zustand und bei entnommenem Behandlungselement dargestellt ist;
- Figur 3: In Seitenansicht das an einem Deckel befestigte, aus der in Figur 2 gezeigten Vorrichtung entnommene Behandlungselement.

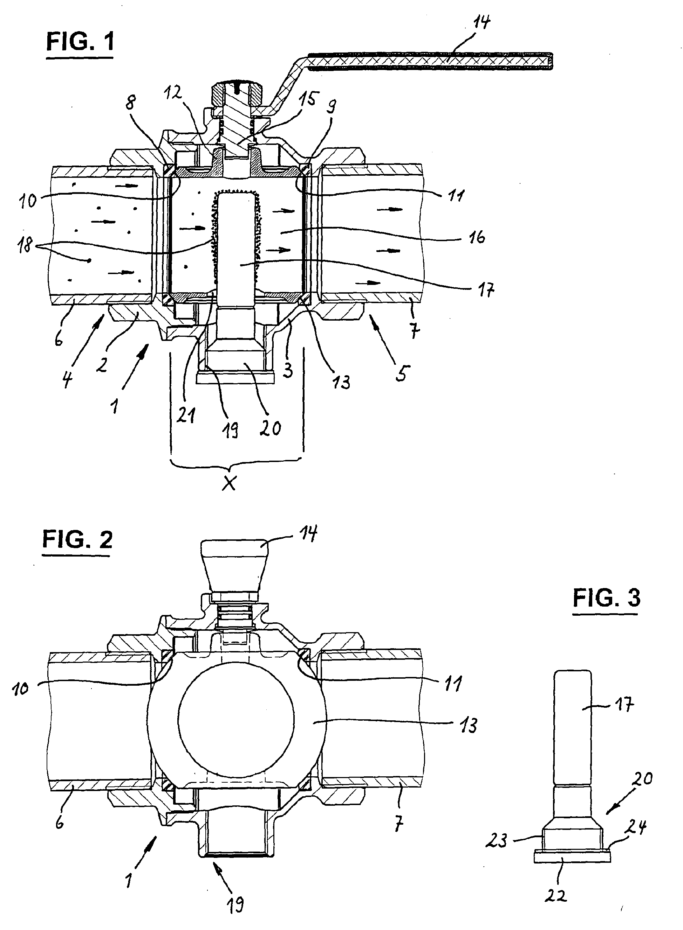

Das Gehäuse der in Figur 1 gezeigten Vorrichtung besteht aus zwei miteinander verschraubten Teilen und weist einen Einlass 4 und einen Auslass 5 auf, die mit einem Innenraum des Gehäuses verbunden sind. An den Einlass und den Auslass sind Rohre 6, 7 einer Wasserleitung angeschlossen. In die beiden Teile 2, 3 des Gehäuses sind koaxial zu ihrer Verschraubung angeordnete Dichtringe 8, 9 eingesetzt, die je einen Ventilsitz 10, 11 bilden. Die Ventilsitze 10, 11 sind gegeneinander gerichtet und begrenzen einen zwischen dem Einlass und dem Auslass liegenden Abschnitt x des Innenraums, so dass Wasser nur durch von den Ventilsitzen umgebene Ventilöffnungen zwischen dem Abschnitt x und den daran angrenzenden Bereichen des Innenraums zirkulieren kann.

Zwischen den Ventilsitzen 10, 11 ist in dem Abschnitt des Innenraums ein Ventilglied 12 angeordnet, das eine an den Ventilsitzen 10, 11 anliegende, kugelförmige Dichtfläche 13 aufweist und durch einen Hebel 14 um eine durch das Kugelzentrum verlaufende Drehachse zwischen einer offenen und einer geschlossenen Stellung gegenüber den Ventilsitzen 10, 11 verdrehbar ist. Der Hebel 14 ist über eine die Gehäusewand durchquerende Achse 15 drehfest mit dem Ventilglied 12 verbunden.

Das Ventilglied 12 weist einen dieses quer zu seiner Drehachse durchquerenden Durchgang 16 auf, dessen Enden in seiner in Figur 1 gezeigten, offenen Stellung auf die Ventilsitze 10, 11 ausgerichtet sind, so dass Wasser vom Einlass 4 durch den Durchgang 16 zum Auslass 5 fliessen kann. Der Wasserstrom ist in dem Durchgang 16 durch kleine Pfeile angedeutet. Ein stabförmiges Element 17 für die Behandlung von Leitungswasser ragt radial in den Durchgang 16 hinein. Im vorliegenden Beispiel handelt es sich um ein Magnetelement 17 mit einem oder mehreren Dauermagneten, das im Leitungswasser treibendes Magnetit 18 und andere Mikropartikel aus magnetischem Material anzieht und auf seine Aussenfläche niederschlägt.

In der Gehäusewand ist eine in den durch die Ventilsitze begrenzten Abschnitt des Innenraums führende Öffnung 19 vorgesehen, die durch einen Deckel 20 verschlossen ist und durch die das Behandlungselement bei abgenommenem Deckel 20 aus dem Gehäuse 1 entnehmbar ist. Ein Ende des stabförmigen Magnetelements 17 ist an der Innenseite des Deckels 20 befestigt und das Ventilglied 12 weist eine in seinen Durchgang 16 führende Öffnung 21 auf, durch die das andere Ende des Magnetelements 17 in den Durchgang 16 hineinragt. Die Öffnungen 19, 21 des Gehäuses und des Ventilglieds sind aufeinander ausgerichtet und sie verlaufen entlang der Drehachse des Ventilglieds 12, so dass das Magnetelement die Beweglichkeit des Ventilglieds 12 zwischen dessen offener und geschlossener Stellung nicht behindert. Es versteht sich, dass das Magnetelement 17 auch unabhängig vom Deckel 20 vorzugsweise im Bereich der Gehäuseöffnung 19 am Gehäuse befestigt sein könnte.

Das Magnetelement 17 ragt über die Mittelachse des Durchgangs hinaus in diesen hinein, so dass es aus einem grossen Bereich des Durchgangsquerschnitts Magnetit anziehen und an seiner Aussenfläche festhalten kann. Die Leistungsfähigkeit des Magnetfilters ist nebst der Grösse und Lage des Magnetelements auch von der Stärke seines Magnetfelds abhängig. Bevorzugt ist das Magnetelement mit einem oder mehreren Hochleistungs-Dauermagneten bestückt.

Zur Entnahme des Magnetelements 17 aus dem Gehäuse wird das Ventilglied 12 vorgängig durch Betätigung des Hebels 14 in seine gegenüber der offenen Stellung um 90 Grad verdrehte, geschlossene Stellung bewegt, die in Figur 2 dargestellt ist. In dieser Figur sind lediglich das Gehäuse 1 und die daran angeschlossenen Leitungsrohre 6,7 geschnitten dargestellt, so dass die Aussenfläche des Ventilglieds mit der kugelförmigen Dichtfläche 13 sichtbar ist. Geschlossene Abschnitte dieser Aussenfläche liegen umlaufend an den Ventilsitzen 10, 11 an und verschliessen die von diesen umgebenen Ventilöffnungen, so dass am Einlass oder am Auslass stehendes Wasser nicht zu der Gehäuseöffnung 19 gelangen kann. Figur 2 zeigt die Vorrichtung mit unverschlossener Gehäuseöffnung 19 und ohne das Behandlungselement, das durch diese Öffnung aus dem Gehäuse entnommen wurde.

Figur 3 zeigt in Seitenansicht den von der in Figur 1 gezeigten Vorrichtung abgeschraubten Deckel 20 der Gehäuseöffnung 19 mit dem daran befestigten Magnetelement 17. Der Deckel hat die Form einer Schraube, mit einem Kopf 22 und einem von diesem ausgehenden Schaft mit einem Aussengewinde 23, das in ein korrespondierendes Innengewinde der Gehäuseöffnung 19 einschraubbar ist. Um den Schaft ist ein am Kopf anliegender Dichtring 24 vorgesehen.

Als Behandlungselement wurde vorstehend einzig das Magnetelement 17 zum Einfangen von Magnetit als Beispiel genannt. Ein anderes, an Stelle des Magnetelements in die Vorrichtung einsetzbares Behandlungselement ist eine Opferanode zum Zwecke des kathodischen Korrosionsschutzes. Eine solche Opferanode kann dieselbe Stabform wie das in den Figuren gezeigte Magnetelement aufweisen. Sie wird während dem Betrieb der Vorrichtung verbraucht und muss daher nach einer gewissen Zeit aus dem Gehäuse entnommen und durch eine neue Opferanode ersetzt werden.

Das entnommene Behandlungselement oder ein dieses ersetzendes, gleichartiges oder andersartiges Behandlungselement ist bei geschlossenem Ventil auch wieder in das Gehäuse einsetzbar und über den Deckel oder durch andere vorgesehene Befestigungsmittel darin befestigbar.

Durch den vorübergehenden Ersatz eines ersten Behandlungselements durch ein andersartiges zweites Behandlungselement kann die Wirkung der Behandlungsvorrichtung verbessert werden. Beispielsweise kann ein zur magnetischen Filterung des Leitungswassers in die Vorrichtung eingesetztes Magnetelement in regelmässigen Abständen vorübergehend durch eine Opferanode für den kathodischen Korrosionsschutz ersetzt werden.

## Patentansprüche

1. Vorrichtung zur Behandlung von Leitungswasser, mit einem Gehäuse (1) mit einem Einlass (4) und einem Auslass (5), die mit einem Innenraum des Gehäuses verbunden sind und mit einem Element (17) für die Behandlung von Leitungswasser, das im Bereich des Innenraums befestigt ist, so dass es mit durch diesen vom Einlass zum Auslass fliessendem Leitungswasser in Kontakt kommt, **dadurch gekennzeichnet, dass**
im Innenraum zwei Ventilsitze (10, 11) vorgesehen sind, die einen zwischen dem Einlass (4) und dem Auslass (5) liegenden Abschnitt (x) des Innenraums begrenzen und ein Ventilglied (12) durch Betätigungsmittel (14) zwischen einer offenen und einer geschlossenen Stellung gegenüber den Ventilsitzen (10, 11) bewegbar ist, wobei es in der offenen Stellung eine vom Einlass durch den Abschnitt (x) des Innenraums zum Auslass fliessende Wasserströmung ermöglicht und in der geschlossenen Stellung an den Ventilsitzen (10, 11) anliegt und diese verschliesst, so dass der Abschnitt (x) vom Einlass (4) und vom Auslass (5) getrennt ist und dass das Element (17) in diesem Abschnitt (x) angeordnet ist und das Gehäuse eine verschliessbare Öffnung (19) aufweist, durch die das Behandlungselement in der geschlossenen Stellung des Ventilglieds aus dem Gehäuse (1) entnehmbar ist.

2. Vorrichtung nach Anspruch 1, **dadurch gekennzeichnet, dass** das Ventilglied (12) eine an den Ventilsitzen (10, 11) anliegende, kugelförmige Dichtfläche (13) aufweist und durch die Betätigungsmittel (14) um eine durch das Kugelzentrum verlaufende Drehachse zwischen der offenen und der geschlossenen Stellung gegenüber den Ventilsitzen (10, 11) verdrehbar ist.

3. Vorrichtung nach Anspruch 1 oder 2, **dadurch gekennzeichnet, dass** das Ventilglied (12) einen Durchgang (16) aufweist, dessen Enden in seiner offenen Stellung auf die Ventilsitze (10, 11) ausgerichtet sind, so dass Wasser vom Einlass (4) durch den Durchgang (16) zum Auslass (5) fliessen kann und dass das Behandlungselement (17) ganz oder teilweise im Durchgang (16) des Ventilglieds (12) angeordnet ist, so dass durch den Durchgang (16) fliessendes Leitungswasser das Behandlungselement (17) umströmt.

4. Vorrichtung nach Anspruch 3, **dadurch gekennzeichnet, dass** das Behandlungselement (17) stabförmig ist und radial in den Durchgang (16) hineinragt.

5. Vorrichtung nach Anspruch 4, **dadurch gekennzeichnet, dass** das Behandlungselement (17) über die Mittelachse des Durchgangs (16) hinaus in diesen hineinragt.

6. Vorrichtung nach einem der Ansprüche 3 bis 5, **dadurch gekxennzeichnet, dass** das Behandlungselement (17) im Bereich der Gehäuseöffnung (19) an dem Gehäuse (1) befestigt ist und durch eine entlang der Drehachse in den Durchgang (16) führende Öffnung (21) des Ventilglieds (12) in den Durchgang (16) hineinragt.

7. Vorrichtung nach Anspruch 6, **dadurch gekennzeichnet, dass** die Gehäuseöffnung (19) durch einen Deckel (20) verschliessbar ist und das Behandlungselement (17) an der Innenseite des Deckels (20) befestigt ist, so dass es mit dem Abnehmen des Deckels (20) aus dem Gehäuse (1) entnehmbar ist.

8. Vorrichtung nach einem der Ansprüche 1 bis 7, **dadurch gekennzeichnet, dass** das Behandlungselement eine mit dem Gehäuse (1) elektrisch verbundene und vorzugsweise aus Magnesium bestehende Opferanode (17) ist.

9. Vorrichtung nach einem der Ansprüche 1 bis 7, **dadurch gekennzeichnet, dass** das Behandlungselement ein Magnetelement (17) mit mindestens einem Dauermagneten zum Einfangen von in Leitungswasser treibendem Magnetit ist.
